# EUROPÄISCHE PATENTSCHRIFT

(11) **EP 4 085 803 B1**
(45) Veröffentlichungstag und Bekanntmachung des Hinweises auf die Patenterteilung: **09.08.2023**
(21) Anmeldenummer: 21172325.9
(22) Anmeldetag: 05.05.2021
(51) Int. Cl.: A47K 3/16, F16B 5/02, F16B 37/16, F16B 7/18

(54) **WANDANKER FÜR EINE SANITÄRWANNE**
WALL ANCHOR FOR A SANITARY TUB
ANCRAGE MURAL POUR UNE BAIGNOIRE SANITAIRE

(43) Veröffentlichungstag der Anmeldung: 09.11.2022
(73) Patentinhaber: EDM-System GmbH, 57399 Kirchhundem (DE)
(72) Erfinder: Malzkorn, Ralf, 34596 Bad Zwesten (DE); Hille, Markus, 57399 Kirchhundem (DE)
(74) Vertreter: Patentanwälte Dörner & Kötter PartG mbB

(56) Entgegenhaltungen:
- DE-B3-102012 110 785

## Beschreibung

Die Erfindung betrifft einen Wandanker zur wandseitigen Befestigung einer Sanitärwanne nach dem Oberbegriff des Patentanspruchs 1.

Wandanker der vorgenannten Art kommen bei Dusch-, oder Badewanneninstallationen zum Einsatz und dienen der Fixierung des Dusch- bzw. Badewannenrandes an einer Bauwerkswand. Ein solcher Wandanker ist beispielsweise aus der DE 10 2012 110 779 A1 bekannt. Dieser weist einen mittels einer Spannschraube an einer Wand zu befestigenden Grundkörper auf, wobei der Grundkörper ein Langloch zur Aufnahme der Spannschraube aufweist. Die Spannschraube ist durch einen Rastbügel geführt, der eine Verzahnung aufweist, die mit einer auf dem Grundkörper angeordneten Verzahnung korrespondiert. Die Höhe des Wandankers ist entsprechend der Rastabstände der Verzahnungen von Grundkörper und Rastbügel einstellbar.

Aus der DE 10 2012 110785 B3 ist ein Wandanker mit den Merkmalen des Oberbegriffs des Anspruchs 1 bekannt.

Nachteilig an dem vorbekannten Wandanker ist, dass zu dessen Höheneinstellung beide Hände erforderlich sind, da sowohl der Grundkörper, als auch der Rastbügel entsprechend positioniert werden müssen. Sodann muss die gefundene Position von Grundkörper und Rastbügel mit einer Hand fixiert werden, da die zweite Hand zum Festschrauben der Spannschraube erforderlich ist. Da für eine Feineinstellung der Position des Grundkörpers regelmäßig auch der Wannenrand entsprechend anzuhalten ist, ist hier oftmals eine Hilfestellung durch eine weitere Person erforderlich.

Hier will die Erfindung Abhilfe schaffen. Der Erfindung liegt die Aufgabe zugrunde, einen Wandanker bereitzustellen, der eine einfache Höheneinstellung mit nur einer Hand ermöglicht. Gemäß der Erfindung wird diese Aufgabe durch einen Wandanker mit den Merkmalen des kennzeichnenden Teils des Patentanspruchs 1 gelöst.

Mit der Erfindung ist ein Wandanker zur wandseitigen Befestigung einer Sanitärwanne bereitgestellt, dessen Höheneinstellung mit lediglich einer Hand ermöglicht ist. Dadurch, dass Verstellmittel zur Verschiebung des Grundkörpers entlang der in dem Langloch angeordneten Befestigungsschraube angeordnet sind, ist zur Höheneinstellung lediglich eine Betätigung der Verstellmittel erforderlich.

Der Erfindung gemäß umfassen die Verstellmittel eine Hülse, durch welche die Befestigungsschraube geführt ist, wobei die Hülse ein Ritzel aufweist, das in eine in dem Langloch angeordnete Verzahnung eingreift. Hierdurch ist eine einfache, feinstufige Höheneinstellung durch Drehung der Hülse ermöglicht. Bevorzugt ist die Hülse hierzu mit einem Drehgriff oder einem Stellrad verbunden.

In Ausgestaltung der Erfindung weist der Drehgriff bzw. das Stellrad eine hohlzylinderförmige Vertiefung zur Aufnahme einer Scheibe auf. Durch die in der Vertiefung zentriert gehaltene Scheibe ist eine Drehung des Drehgriffs bzw. des Stellrades auch bei leicht angezogener Befestigungsschraube ermöglicht. Bevorzugt sind an dem Drehgriff bzw. dem Stellrad wenigstens zwei Rastzungen zur Fixierung einer in der Vertiefung eingesetzten Scheibe angeordnet.

In weiterer Ausgestaltung der Erfindung weist der Grundkörper an seiner wandseitigen Rückseite einen keilförmigen Ansatz mit einer Auflagefläche zur Auflage eines Randes einer Sanitärwanne auf. Hierdurch ist eine orthogonal zur Wand angeordnete Auflagefläche zur Auflage des Wannenrandes bei gleichzeitig verminderter Anlagefläche des Grundkörpers an der Wand erzielt. Die verminderte Anlagefläche bewirkt eine höhere Flächenpressung des Grundkörpers bei angezogener Befestigungsschraube an der Wand. Darüber hinaus ist durch die reduzierte Anlagefläche auch eine Anlage an unebenen Wänden ermöglicht. In Weiterbildung der Erfindung sind in den Ansatz zwei gegenüberliegend angeordnete Nuten zum Eingriff der Schenkel einer auf den Ansatz aufschiebbaren C-Profilschiene eingebracht. Hierdurch ist eine einfache, ausgerichtete Montage einer C-Profilschiene als Auflageschiene für eine durchgehende Fläche zur Auflage eines Wannenrandes ermöglicht.

In Ausgestaltung der Erfindung ist an dem Grundkörper auf seiner dem Ansatz gegenüberliegenden Vorderseite eine Deckschiene befestigt, die einen abgewinkelten Schenkel aufweist, der sich im Wesentlichen parallel zur Auflagefläche des Ansatzes erstreckt. Hierdurch ist eine zweite Anlagefläche des Wandankers mit geringer Anlagefläche an der Wand bereitgestellt. Vorzugsweise entspricht die Länge des abgewinkelten Schenkels der Tiefe des Grundkörpers im Bereich des Ansatzes.

In weiterer Ausgestaltung der Erfindung weist die Deckschiene ein Langloch auf, das bevorzugt dem Langloch des Grundkörpers entspricht, mit dem es fluchtet. Dabei weist die Deckschiene vorteilhaft einen rechtwinklig abgewinkelten zweiten Schenkel auf, der in einem in dem Grundkörper hierzu eingebrachten Eingriff eingreift. Hierdurch ist eine formschlüssige, lösbare Verbindung der Deckschiene mit dem Grundkörper erzielt.

In Weiterbildung der Erfindung ist im Bereich des Ansatzes ein Klemmbügel angeordnet, der schwenkbar mit dem Grundkörper verbunden ist, wobei Spannmittel zur Festlegung des Klemmbügels zur Klemmung eines auf der Auflagefläche aufliegenden Randes einer Sanitärwanne angeordnet sind. Vorzugsweise sind die Spannmittel durch eine Schraubverbindung gebildet, die eine durch den Grundkörper und den Klemmbügel geführte Spannschraube umfasst, auf die eine Mutter, insbesondere eine Flügelmutter aufgeschraubt ist. Hierdurch ist eine einfache Klemmung des Randes der Sanitärwanne über den Klemmbügel durch Anziehen der Mutter erzielt. An Stelle einer Flügelmutter kann auch eine Rändelmutter oder eine in sonstiger Weise ausgebildete Mutter vorgesehen sein, die ein einfaches Anziehen von Hand ermöglicht.

In Ausgestaltung der Erfindung ist der Klemmbügel an einer an den Grundkörper befestigten Deckschiene angeordnet, wobei die Deckschiene einen quaderförmigen Durchbruch aufweist, in den eine an den Klemmbügel angeordnete Haltenase eingreift. Bevorzugt ist die Haltenase endseitig in Richtung der Befestigungsschraube abgewinkelt. Hierdurch ist der Klemmbügel einfach durch Einbringen der Haltenase in den Durchbruch montierbar, wobei der Klemmbügel durch die abgewinkelte Haltenase in dem Durchbruch verliersicher gehalten ist. Durch Anziehen der Spannschraube ist Klemmbügel so in Richtung des Randes der Sanitärwanne verschwenkbar.

In Weiterbildung der Erfindung ist auf den Absatz eine Schutzkappe aufgebracht, die lösbar mit dem Absatz verbunden ist. Hierdurch ist eine ebene Auflagefläche für einen Wannenrand erzielt.

In Ausgestaltung der Erfindung weist die Schutzkappe wenigstens eine Rastnase oder einen Raststeg auf, der in eine in den Absatz eingebrachte Nut einrastbar ist. Hierdurch ist eine formschlüssige und zugleich lösbare Verbindung der Schutzkappe mit dem Absatz erzielt.

In weiterer Ausgestaltung der Erfindung ist auf den Absatz eine C-Profilschiene aufgeschoben, deren freie Schenkel in die beiden gegenüberliegend angeordneten Nuten eingreifen. Hierdurch ist eine formschlüssige verschiebbare Befestigung einer C-Profilschiene an dem Wandanker ermöglicht.

Gegenstand der Erfindung ist weiterhin eine Wandanker-Anordnung, umfassend eine C-Profilschiene, auf die wenigstens zwei Wandanker der vorstehend angeführten Art beabstandet zueinander aufgeschoben sind. Eine derart mit den wenigstens zwei Wandankern verbundene C-Profilschiene dient der durchgehenden Auflage des Randes einer Sanitärwanne.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

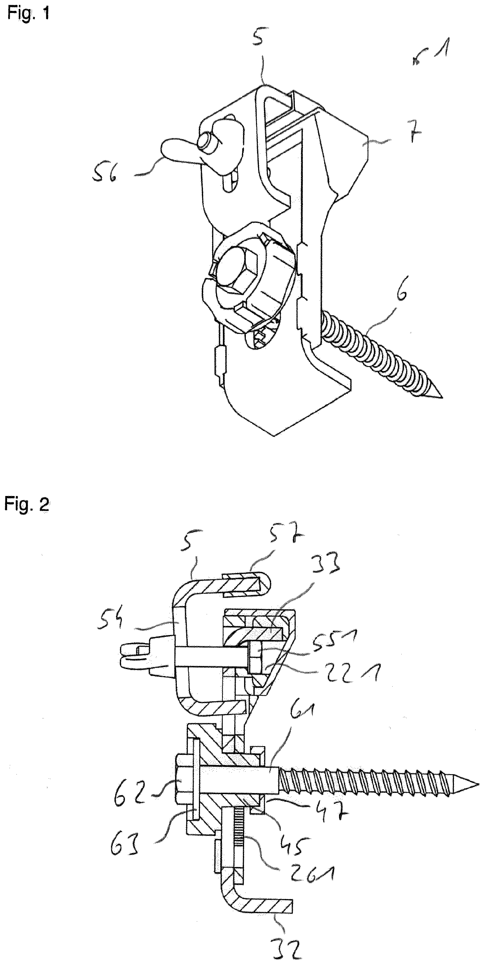

- Figur 1: die schematische Darstellung eines Wandankers zur wandseitigen Befestigung einer Sanitärwanne;
- Figur 2: die Darstellung des Wandankers aus Figur 1 im Längsschnitt;
- Figur 3: eine Explosionsdarstellung des Wandankers aus Figur 1;
- Figur 4: die Darstellung des Wandankers aus Figur 1 mit aufliegendem Wannenrand;

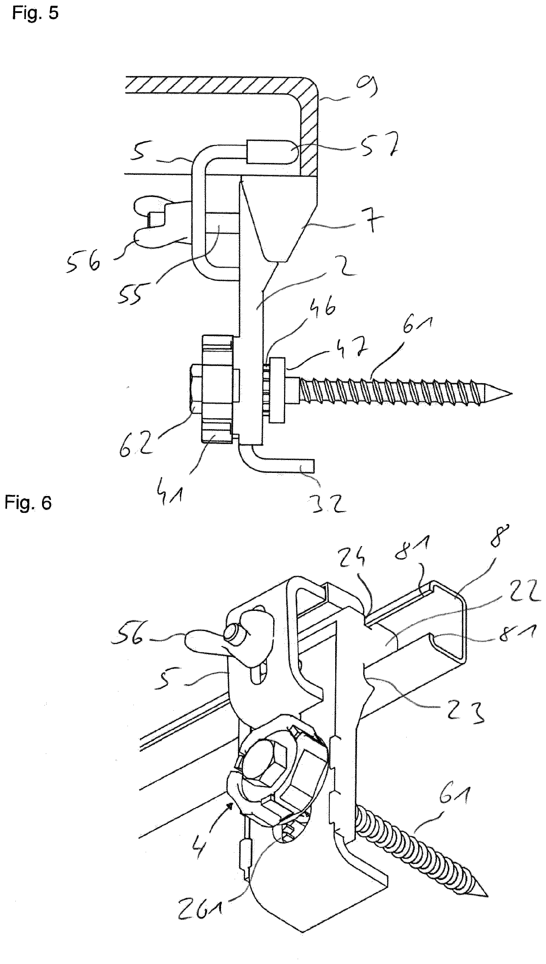

- Figur 5: die Darstellung der Anordnung aus Figur 4 im Teilschnitt;
- Figur 6: die Darstellung des Wandankers aus Figur 1 mit entfernter Schutzkappe und eingeschobener C-Profilschiene;
- Figur 7: die Darstellung der Anordnung aus Figur 6 mit aufgelegtem Wannenrand;
- Figur 8: die Darstellung der Anordnung aus Figur 7 im Teilschnitt und

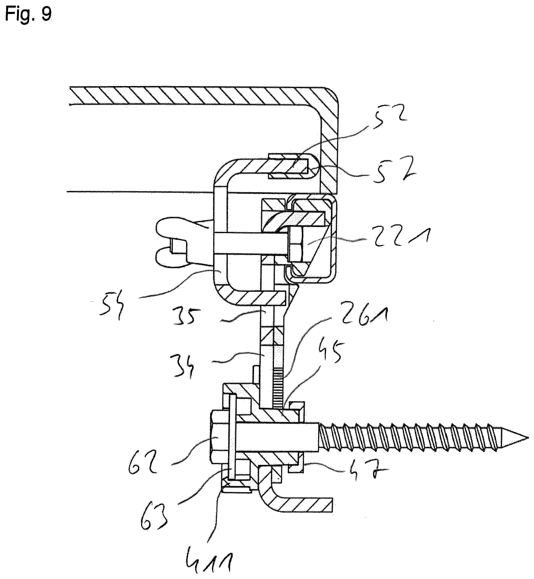

- Figur 9: die Darstellung der Anordnung aus Figur 7 im Längsschnitt.

Der als Ausführungsbeispiel gewählte Wandanker 1 besteht im Wesentlichen aus einem Grundkörper 2, an dem eine Deckschiene 3 befestigt ist und der ein Stellrad 4 aufnimmt, durch das eine Befestigungsschraube 6 geführt ist und an dem ein Klemmbügel 5 schwenkbar angeordnet ist.

Der Grundkörper 2 ist im Ausführungsbeispiel aus Kunststoff hergestellt, vorzugsweise aus Polyamid oder Polypropylen. Durch die Ausbildung aus einem solchen Kunststoff ist eine Schallentkopplung zwischen einer aufzunehmenden Sanitärwanne und der Gebäudewand erzielt. Der Grundkörper 2 umfasst eine Grundplatte 21, die im Wesentlichen rechteckig ausgebildet ist. An die der - nicht dargestellten - der Wand zugewandten Rückseite des Grundkörpers 2 ist an die Grundplatte 21 ein keilförmiger Ansatz 22 angeordnet, der etwa mittig mit einem im Wesentlichen orthogonal zur Grundplatte 21 verlaufenden Eingriff 23 versehen ist. Orthogonal zu dem Eingriff 23 ist weiterhin in die Auflagefläche des keilförmigen Ansatzes 22 eine Nut 24 eingebracht.

Die Grundplatte 21 ist an ihrer dem keilförmigen Ansatz 22 gegenüberliegenden Vorderseite mit einem umlaufenden Rand 25 versehen, der an der dem keilförmigen Ansatz 22 gegenüberliegenden Unterseite offen ist. Unterhalb des keilförmigen Ansatzes 22 sind an die beiden Längsseiten des Randes 25 gegenüberliegend sich nach innen erstreckende Führungsarme 251 angeordnet. Zwischen den Führungsarmen 251 ist in die Grundplatte 21 ein Langloch 26 eingebracht, das an einer Seite mit einer Verzahnung 261 versehen ist. Beabstandet zum Langloch 26 ist eine Ausnehmung 27 zur Aufnahme der Haltenase 521 des Klemmbügels 5 eingebracht. Beabstandet zu der Ausnehmung 27 ist weiterhin ein Einschub 28 zur Aufnahme des zweiten Schenkels 33 der Deckschiene 3 eingebracht.

Die Deckschiene 3 ist im Wesentlichen in Art eines U-förmigen Blechbiegestanzteils ausgeführt. In die Deckseite 31 ist ein Langloch 34 eingebracht. Auf der Längsachse des Langlochs 34 ist beabstandet zu diesem ein quaderförmiger Durchbruch 35 sowie beabstandet zu diesem eine Bohrung 36 eingebracht. An ihrem dem Langloch 34 zugewandten Ende geht die Deckschiene 3 in einen ersten Schenkel 32 und an ihrem der Bohrung 36 zugewandten Ende in einen zweiten Schenkel 33 über. Die Deckschiene 3 ist mit ihrem zweiten Schenkel 33 in den Einschub 28 eingesteckt, wobei das Langloch 34, das entsprechend dem Langloch 26 des Grundkörpers 2 ausgebildet ist, mit diesem fluchtet. Die Deckseite 31 ist zwischen den Führungsarmen 251 des Grundkörpers 2 gehalten. Der Durchbruch 35 der Deckschiene 3 fluchtet mit der Ausnehmung 27 und die Bohrung 36 fluchtet mit einer Bohrung 29, die zur Durchführung einer Spannschraube 55 durch die Grundplatte 21 und den an dieser angeordneten keilförmigen Ansatz 22 eingebracht ist.

Das Stellrad 4 umfasst ein Griffstück 41, das im Wesentlichen in Form eines sechsseitigen Prismas ausgebildet ist und umlaufend mit Rippen 42 versehen ist. Mittig ist in das Griffstück 41 eine zylindrische Einsenkung 43 zur Aufnahme einer Scheibe 63 eingebracht. Mittig ist in das Griffstück 41 eine Bohrung 44 eingebracht, die in dem zylindrischen Hohlraum einer an das Griffstück 41 angeformten Hülse 45 mündet. Die Hülse 45 ist außen mit einem Ritzel 46 versehen.

Das Stellrad 4 ist mit seiner Hülse 45 durch das Langloch 34 der Deckschiene 3 in das Langloch 26 des Grundkörpers 2 geführt, wobei die Zähne 461 des Ritzels 46 in die Verzahnung 261 des Langlochs 26 eingreifen. Axial ist das Stellrad 4 über eine Sicherungskappe 47 an dem Grundkörper 2 fixiert, die auf das Ritzel 46 aufgeclipst ist. An dem Stellrad 4 sind umlaufend jeweils um 120° versetzt zueinander drei Rastzungen angeordnet, über welche die Scheibe 63 verliersicher in der Einsenkung 43 gehalten ist.

Der Klemmbügel 5 ist im Ausführungsbeispiel als im Wesentlichen U-förmiges Blechstanzbiegeteil ausgebildet und weist eine Deckseite 51 auf, in die ein Langloch 54 eingebracht ist. An einem Ende geht die Deckseite 51 in einen ersten Schenkel 52 über, an den eine im Wesentlichen T-förmige Haltenase 521 angeformt ist. Dem ersten Schenkel 52 gegenüberliegend geht die Deckseite 51 in einen zweiten Schenkel 53 über, der gegenüber dem ersten Schenkel 52 länger ausgebildet ist. Auf den zweiten Schenkel 53 ist eine Schutzkappe 57 aufgeschoben. Im Ausführungsbeispiel ist die Schutzkappe 57 aus einem Elastomerkunststoff hergestellt. Alternativ kann die Schutzkappe 57 auch aus Gummi oder aus einem sonstigen Kunststoff hergestellt sein.

Der Klemmbügel 5 ist mit seiner T-förmigen Haltenase 521 durch den Durchbruch 35 der Deckschiene 3 geführt, deren Länge hierzu im Wesentlichen der maximalen Breite der T-förmigen Haltenase 521 entspricht. Anschließend ist der Klemmbügel 5 um 90° verdreht, wonach sich der zweite Schenkel 53 oberhalb des zweiten Schenkels 33 der Deckschiene 3 befindet. In dieser Position hintergreift die T-förmige Haltenase 521 den Durchbruch 35 der Deckschiene 3, wodurch der Klemmbügel 5 verliersicher gehalten ist. Durch die Bohrungen 29, 36 von Grundkörper 2 und Deckschiene 3 sowie durch das Langloch 54 des Klemmbügels 5 ist eine Spannschraube 55 geführt, deren Schraubenkopf 551 in einer hierzu in dem Ansatz 22 der Grundplatte 21 eingebrachten Einsenkung 221 drehsicher gehalten ist. Die Einsenkung 221 ist über die auf den keilförmigen Ansatz 22 aufgebrachte Stützkappe 7 verdeckt. Die Schutzkappe 7 weist Raststege 71 auf, die in den Eingriff 23 sowie in die Nut 24 des Ansatzes 22 eingreifen, wodurch die Stützkappe 7 formschlüssig mit dem Ansatz 22 verbunden ist. Auf die Spannschraube 55 ist eine Flügelmutter 56 aufgeschraubt, die an dem Klemmbügel 5 anliegt.

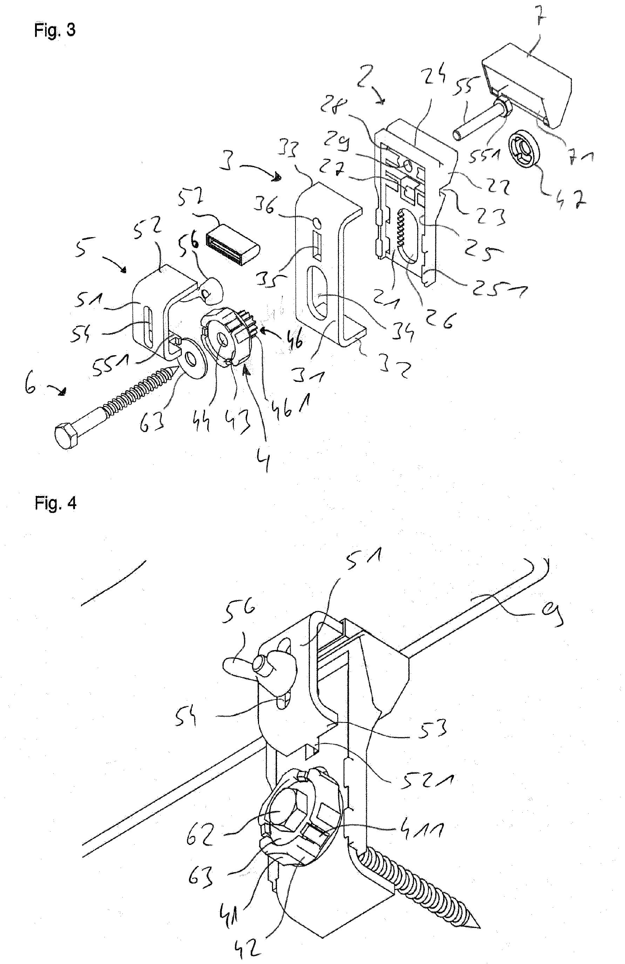

In Figur 4 ist die Fixierung eines - lediglich schematisch dargestellten - Randes einer Badewanne mit einem solchen Wandanker 1 gezeigt. Hierbei ist die Befestigungsschraube 6 durch das Stellrad 4 geführt und in eine - nicht dargestellte - Wand geschraubt, an der auch der Wannenrand 9 anliegt. Der Grundkörper 2 liegt zunächst mit seinem Langloch 26 auf dem Ritzel 46 der Hülse 45 des Stellrades 4 auf. Nach leichtem Anziehen der Befestigungsschraube 6 kann nun durch einfaches Drehen der Befestigungsschraube 6 die gewünschte Höhe des Wandankers 1 sowie des auf der Stützkappe 7 aufliegenden Wannenrandes 9 eingestellt werden. Die Drehung des Stellrades 4 bewirkt eine Drehung des mit diesem verbundenen Ritzels 46, dessen Zähne 461 in die Verzahnung 261 des Langlochs 26 des Grundkörpers 2 eingreifen und diese tangential bewegen. Nach Einstellen der gewünschten Höhe kann die Befestigungsschraube 6 nun festgezogen werden. Abschließend wird durch Anziehen der Flügelmutter 56 der mit der Schutzkappe 57 versehene zweite Schenkel 53 gegen den Wannenrand 9 gepresst, wodurch der Wannenrand zwischen der - nicht dargestellten - Wand und dem Klemmbügel 5 klemmend fixiert wird.

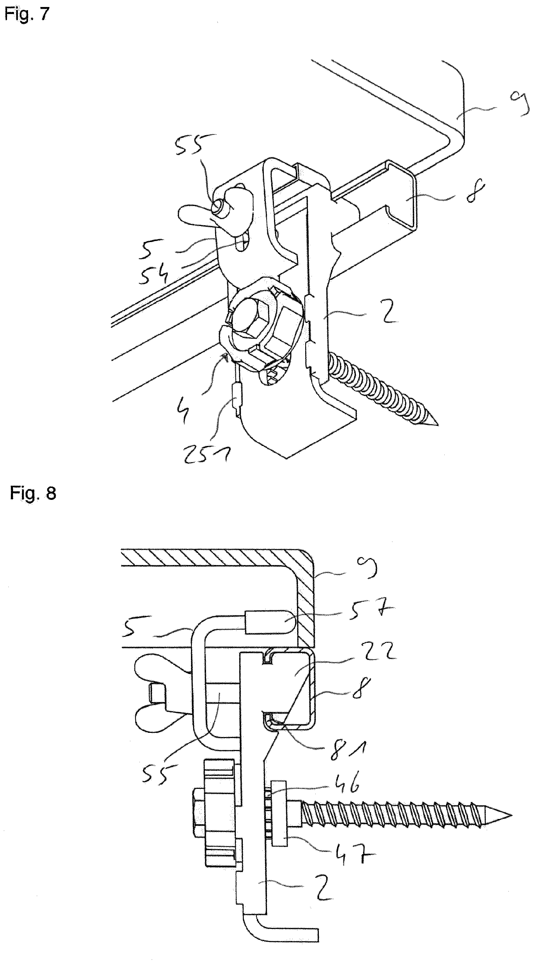

In Figur 7 ist eine Wandankeranordnung mit einer C-Profilschiene 8 gezeigt, auf welcher der Wannenrand 9 einer - lediglich schematisch dargestellten - Badewanne aufliegt. Dabei ist von der Wandanker-Anordnung lediglich einer der wenigstens zwei vorhandenen Wandanker 1 gezeigt. In dieser Anwendung ist zunächst die Stützkappe 7 von dem keilförmigen Ansatz 22 des Wandankers 1 entfernt. Die C-Profilschiene 8 ist sodann auf den keilförmigen Ansatz 22 aufgeschoben, wobei die freien Schenkel 81 der C-Profilschiene 8 in den Eingriff 23 beziehungsweise die gegenüberliegende Nut 24 des keilförmigen Ansatzes 22 eingreifen. Die C-Profilschiene 8 ist so formschlüssig, jedoch verschiebbar mit dem Grundkörper 2 des Wandankers 1 verbunden. Nach erfolgter Höheneinstellung der wenigstens zwei mit der C-Profilschiene 8 verbundenen Wandanker 1 über das jeweilige Stellrad 4 werden die Befestigungsschrauben 6 wiederum angezogen und der Wannenrand 9 wird durch Anziehen der Flügelmuttern 56 der Wandanker 1 zwischen den Klemmbügeln 5 und der - nicht dargestellten - Wand eingespannt.

## Patentansprüche

1. Wandanker (1) zur wandseitigen Befestigung einer Sanitärwanne, umfassend einen Grundkörper (2), der ein Langloch (26) aufweist, durch das eine Befestigungsschraube (6) zur Befestigung des Grundkörpers an einer Wand geführt ist, wobei Verstellmittel zur Verschiebung des Grundkörpers (2) entlang der in dem Langloch (26) angeordneten Befestigungsschraube (6) angeordnet sind, **dadurch gekennzeichnet, dass** die Verstellmittel eine Hülse (45) umfassen, durch welche die Befestigungsschraube (6) geführt ist, wobei die Hülse (45) ein Ritzel (46) aufweist, das in eine in dem Langloch (26) angeordnete Verzahnung (261) eingreift.

2. Wandanker nach Anspruch 1, **dadurch gekennzeichnet, dass** die Hülse (45) mit einem Drehgriff oder einem Stellrad (4) verbunden ist.

3. Wandanker nach Anspruch 2, **dadurch gekennzeichnet, dass** der Drehgriff oder das Stellrad (4) eine hohlzylinderförmige Einsenkung (43) zur Aufnahme einer Scheibe (63) aufweist.

4. Wandanker nach einem der vorgenannten Ansprüche, **dadurch gekennzeichnet, dass** der Grundkörper (2) an seiner wandseitigen Rückseite einen keilförmigen Ansatz (22) mit einer Auflagefläche zur Auflage eines Randes (9) einer Sanitärwanne aufweist.

5. Wandanker nach Anspruch 4, **dadurch gekennzeichnet, dass** in den Ansatz (22) zwei versetzt angeordnete Nuten (23, 24) zum Eingriff der freien Schenkel (81) einer auf den Ansatz (22) aufschiebbaren C-Profilschiene (8) eingebracht sind.

6. Wandanker nach Anspruch 4 oder 5, **dadurch gekennzeichnet, dass** an dem Grundkörper (2) auf seiner dem Ansatz (22) gegenüberliegenden Vorderseite eine Deckschiene (3) befestigt ist, die einen abgewinkelten ersten Schenkel (32) aufweist, der sich im Wesentlichen parallel zur Auflagefläche des Ansatzes (22) erstreckt.

7. Wandanker nach Anspruch 6, **dadurch gekennzeichnet, dass** die Deckschiene (3) ein Langloch (34) aufweist, das dem Langloch (26) des Grundkörpers (2) entspricht, mit dem es fluchtet, wobei die Deckschiene (3) bevorzugt einen rechtwinklig abgewinkelten zweiten Schenkel (33) aufweist, der in einen in dem Grundkörper (2) hierzu eingebrachten Einschub (28) eingreift.

8. Wandanker nach einem der Ansprüche 4 bis 7, **dadurch gekennzeichnet, dass** im Bereich des Ansatzes (22) ein Klemmbügel (5) angeordnet ist, der schwenkbar mit dem Grundkörper (2) verbunden ist, wobei Spannmittel zur Festlegung des Klemmbügels (5) zur Klemmung eines auf der Auflagefläche aufliegenden Randes(9) einer Sanitärwanne angeordnet sind, die vorzugsweise durch eine Schraubverbindung gebildet sind, die eine durch den Grundkörper (2) und den Klemmbügel (5) geführte Spannschraube (55) umfasst, auf die eine Mutter, insbesondere eine Flügelmutter (56) aufgeschraubt ist.

9. Wandanker nach Anspruch 8, **dadurch gekennzeichnet, dass** der Klemmbügel (5) an einer an dem Grundkörper (2) befestigten Deckschiene (3) befestigt ist, wobei die Deckschiene (3) einen quaderförmigen Durchbruch (35) aufweist, in den eine an dem Klemmbügel (5) angeordnete Haltenase (521) eingreift, die bevorzugt T-förmig ausgebildet ist.

10. Wandanker nach einem der Ansprüche 4 bis 9, **dadurch gekennzeichnet, dass** auf den Absatz (22) eine Stützkappe (7) aufgebracht ist, die lösbar mit dem Absatz (22) verbunden ist.

11. Wandanker nach Anspruch 10, **dadurch gekennzeichnet, dass** die Stützkappe (7) wenigstens eine Rastnase oder einen Raststeg (71) aufweist, der in eine in dem Absatz (22) eingebrachte Nut (23, 24) einrastbar ist.

12. Wandanker nach einem der Ansprüche 5 bis 9, **dadurch gekennzeichnet, dass** auf den Absatz (22) eine C-Profilschiene (8) aufgeschoben ist, deren freie Schenkel (81) in die beiden versetzt angeordneten Nuten (23, 24) eingreifen.

13. Wandanker-Anordnung, umfassend eine C-Profilschiene (8), auf die wenigstens zwei Wandanker (1) nach einem der Ansprüche 5 bis 9 mit ihrem keilförmigen Ansatz (22) beabstandet zueinander aufgeschoben sind.

## Claims

1. Wall anchor (1) for wall-side fastening of a sanitary tub, comprising a base body (2), which has an elongated hole (26), through which a fastening screw (6) for fastening the base body to a wall is guided, wherein adjusting means are arranged for displacing the base body (2) along the fastening screw (6) arranged in the elongated hole (26), **characterised in that** the adjusting means comprise a sleeve (45), through which the fastening screw (6) is guided, wherein the sleeve (45) has a pinion (46), which engages in a toothing (261) arranged in the elongated hole (26).

2. Wall anchor according to claim 1, **characterised in that** the sleeve (45) is connected to a rotary handle or an adjusting wheel (4).

3. Wall anchor according to claim 2, **characterised in that** the rotary handle or the adjusting wheel (4) has a hollow-cylindrical recess (43) for receiving a disc (63).

4. Wall anchor according to one of the previous claims, **characterised in that** the base body (2) has a wedge-shaped projection (22) on its rear side facing the wall with a support surface for supporting an edge (9) of a sanitary tub.

5. Wall anchor according to claim 4, **characterised in that** two offset grooves (23, 24) are inserted in the projection (22) for engagement of the free legs (81) of a C-profile rail (8), which can be pushed onto the projection (22).

6. Wall anchor according to claim 4 or 5, **characterised in that** a cover rail (3) is fastened to the base body (2) on its front side opposite the projection (22), which cover rail has an angled first leg (32), which extends substantially parallel to the support surface of the projection (22).

7. Wall anchor according to claim 6, **characterised in that** the cover rail (3) has an elongated hole (34), which corresponds to the elongated hole (26) of the base body (2), with which it is aligned, wherein the cover rail (3) preferably has a second leg (33) bent at right angles, which engages in an insert (28) provided in the base body (2) for this purpose.

8. Wall anchor according to one of claims 4 to 7, **characterised in that** in the area of the projection (22) a clamping bracket (5) is arranged, which is pivotably connected to the base body (2), wherein clamping means are arranged for fixing the clamping bracket (5) for clamping an edge (9) of a sanitary tub supported on the support surface, which are preferably formed by a screw connection, which comprises a clamping screw (55) guided through the base body (2) and the clamping bracket (5), onto which a nut, in particular a wing nut (56), is screwed.

9. Wall anchor according to claim 8, **characterised in that** the clamping bracket (5) is fastened to a cover rail (3) attached to the base body (2), wherein the cover rail (3) has a cuboidal opening (35), in which engages a retaining lug (521) arranged on the clamping bracket (5), which is preferably T-shaped.

10. Wall anchor according to one of claims 4 to 9, **characterised in that** a support cap (7) is mounted on the projection (22), which is detachably connected to the projection (22).

11. Wall anchor according to claim 10, **characterised in that** the support cap (7) has at least one latching lug or one latching web (71), which can be latched into a groove (23, 24) inserted in the projection (22).

12. Wall anchor according to one of claims 5 to 9, **characterised in that** a C-profile rail (8) is pushed onto the projection (22), the free legs (81) of which engage in the two offset grooves (23, 24).

13. Wall anchor arrangement comprising a C-profile rail (8), onto which at least two wall anchors (1) according to one of claims 5 to 9 are pushed with their wedge-shaped projection (22) at a distance from one another.

## Revendications

1. Ancrage mural (1) pour la fixation d'une baignoire sanitaire côté mur, comprenant un corps de base (2) qui présente un trou oblong (26) à travers lequel est guidée une vis de fixation (6) servant à fixer le corps de base contre un mur, sachant que sont disposés des moyens d'ajustement pour déplacer le corps de base (2) le long de la vis de fixation (6) disposée dans le trou oblong (26), **caractérisé en ce que** les moyens d'ajustement comprennent une douille (45) à travers laquelle est guidée la vis de fixation (6), sachant que la douille (45) présente un pignon (46) engrenant dans une denture (261) disposée dans le trou oblong (26).

2. Ancrage mural selon la revendication 1, **caractérisé en ce, que** la douille (45) est reliée avec une poignée tournante ou une roue d'ajustement (4).

3. Ancrage mural selon la revendication 2, **caractérisé en ce, que** la poignée tournante ou la roue d'ajustement (4) présente un creux (43) de forme cylindrique creuse destiné à recevoir une rondelle (63).

4. Ancrage mural selon l'une des revendications précédentes, **caractérisé en ce que** le corps de base (2) présente, contre son dos côté mur, un épaulement (22) cunéiforme avec une surface permettant l'applique du bord (9) d'une baignoire sanitaire.

5. Ancrage mural selon la revendication 4, **caractérisé en ce, que** dans l'épaulement (22) ont été ménagées deux gorges (23, 24) disposées décalées pour qu'engrènent les branches libres (81) d'un rail profilé en C (8) enfilable sur l'épaulement (22).

6. Ancrage mural selon la revendication 4 ou 5, **caractérisé en ce, qu'**est fixé contre le corps de base (2), sur son côté avant situé en face de l'épaulement (22), un rail de capotage (3) présentant une première branche (32) coudée qui s'étend essentiellement de manière parallèle à la surface d'applique de l'épaulement (22).

7. Ancrage mural selon la revendication 6, **caractérisé en ce, que** le rail de capotage (3) présente un trou oblong (34) correspondant au trou oblong (26) - dans l'alignement duquel il se trouve - du corps de base (2), sachant que le rail de capotage (3) présente de préférence une deuxième branche (33) coudée à angle droit, qui engrène dans un volume d'insertion (28) ménagé à cet effet dans le corps de base (2).

8. Ancrage mural selon l'une des revendications 4 à 7, **caractérisé en ce que** dans la zone de l'épaulement (22) est disposé un étrier de bridage (5) relié avec le corps de base (2) tout en pouvant pivoter, sachant que sont disposés des moyens de serrage pour immobiliser l'étrier de bridage (5) servant à brider un bord (9) de baignoire sanitaire en applique sur la surface d'applique, moyens qui sont formés de préférence par une jonction vissée, jonction qui comprend une vis de serrage (55) passée à travers le corps de base (2) et l'étrier de serrage (5), vis sur laquelle est vissé un écrou, en particulier un écrou à ailettes (56).

9. Ancrage mural selon la revendication 8, **caractérisé en ce, que** l'étrier de bridage (5) est fixé contre un rail de capotage (3) lui-même fixé contre le corps de base (2), sachant que le rail de capotage (3) présente une perforation (35) parallélépipédique dans laquelle engrène une saillie de retenue (521) disposée contre l'étrier de bridage (5), saillie qui est configurée de préférence en T.

10. Ancrage mural selon l'une des revendications 4 à 9, **caractérisé en ce qu'**est monté sur l'épaulement (22) une coiffe d'appui (7) reliée de manière détachable avec l'épaulement (22).

11. Ancrage mural selon la revendication 10, **caractérisé en ce, que** la coiffe d'appui (7) présente au moins une saillie de crantage ou une nervure de crantage (71) pouvant encranter dans une gorge (23, 24) ménagée dans l'épaulement (22).

12. Ancrage mural selon l'une des revendications 5 à 9, **caractérisé en ce que** sur l'épaulement (22) est enfilé un rail profilé en C (8) dont les branches libres (81) engrènent dans les deux gorges disposées décalées (23, 24).

13. Agencement d'ancrage mural, comprenant un rail profilé en C (8) sur lequel sont enfilés - à distance l'un de l'autre - au moins deux ancrages muraux (1) selon l'une des revendications 5 à 9, avec leur épaulement cunéiforme (22).
